# EUROPEAN PATENT SPECIFICATION

(11) **EP 4 176 363 B1**
(45) Date of publication and mention of the grant of the patent: **11.03.2026**
(21) Application number: 21742611.3
(22) Date of filing: 22.06.2021
(51) Int. Cl.: G06F 21/57, G06F 21/55

(54) **AUTOMATED MAPPING FOR IDENTIFYING KNOWN VULNERABILITIES IN SOFTWARE PRODUCTS**
AUTOMATISIERTE ABBILDUNG ZUR IDENTIFIZIERUNG BEKANNTER SCHWACHSTELLEN IN SOFTWAREPRODUKTEN
MAPPAGE AUTOMATISÉ D'IDENTIFICATION DE VULNÉRABILITÉS CONNUES DANS DES PRODUITS LOGICIELS

(30) Priority: 02.07.2020 US 202016919199
(43) Date of publication of application: 10.05.2023
(73) Proprietor: Cisco Technology, Inc., San Jose, California 95134-1706 (US)
(72) Inventor: SLOANE, Andy, Pleasanton, CA 94566 (US); KULSHRESHTHA, Ashutosh, Cupertino, CA 95014 (US); PATEL, Hiral Shashikant, San Jose, CA 95129 (US); JEYAKUMAR, Vimal, Los Altos, CA 94024 (US); YADAV, Navindra, Cupertino, CA 95014 (US); BALUS, Florin Stelian, San Jose, CA 95126 (US)
(74) Representative: Warren, Caroline Elisabeth
(86) International application number: PCT/US2021/038470
(87) International publication number: WO 2022/005816

(56) References cited:
- US-A1- 2020 110 885
- US-B1- 9 304 980
- SILVIO CESARE: "Software Similarity and Classification", 1 June 2013 (2013-06-01), pages 1 - 224, XP055491536, Retrieved from the Internet <URL:http://dro.deakin.edu.au/eserv/DU:30063491/cesare-softwaresimilarity-2013A.pdf> [retrieved on 20180710]

## Description

### TECHNICAL FIELD

The subject matter of this disclosure relates in general to the field of application security, more particularly to runtime application self-protection by identifying known vulnerabilities in software products by automatically mapping the software products to known vulnerabilities.

### BACKGROUND

The National Vulnerability Database (NVD) is the U.S. government repository of standards based vulnerability management data. The NVD includes databases of security checklist references, security-related software flaws, misconfigurations, product names, and impact metrics. The definitions for vulnerabilities in the NVD typically include a Common Platform Enumeration (CPE), which may include vendor name, product name and product version, along with some other properties/dependencies under which the vulnerability is exposed. One problem with vulnerability assessment of an application or software product using the information obtained from the NVD is that the libraries which used for identifying vulnerabilities in the application's properties or dependencies may not correspond to the CPE used for defining the vulnerabilities in the NVD. For example, the CPEs can be based on standards, formats, nomenclatures, etc., which differ from the identifications and nomenclatures used in the application libraries. This mismatch leads to ineffective use of the NVD in identifying and managing known vulnerabilities in the applications.

US 2020/0110885 discloses a vulnerability assessment server that extracts a program name from metadata for a program and searches vulnerability data using the name to determine vulnerabilities of the program. Detection of cloned packages based on various criteria including filename similarity is discussed in S. Cesare, "Software Similarity and Classification", Deakin University (2013), available online at https://dro.deakin.edu.au/articles/thesis/ Software _similarity_and _classification/21103636/1. US9304980 discloses a system for identifying vulnerabilities by matching the contents of a file or a digest of the file against reference data to identify a component version and then looking up vulnerabilities associated with the identified version in a vulnerabilities database.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIGS. 1A-B illustrate aspects of a network environment in accordance with some examples;
FIG. 2 a system for automated equivalence mapping according to some example aspects;
FIG. 3 illustrates an implementation of a text classifier, in accordance with some examples;
FIG. 4 illustrates an implementation of an equivalence mapping engine, in accordance with some examples;
FIG. 5 illustrates a process for automated equivalence mapping, in accordance with some examples;
FIG. 6 illustrates an example network device in accordance with some examples; and
FIG. 7 illustrates an example computing device architecture, in accordance with some examples.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used.

### OVERVIEW

Aspects of the invention are set out in the independent claims and preferred features are set out in the dependent claims. Features of one aspect may be applied to any aspect alone or in combination with other aspects.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Disclosed herein are systems, methods, and computer-readable media for performing automated equivalence mapping between one or more names associated with a software product (the names being based on a first naming convention) and one or more known vulnerabilities, maintained for example, in a database of known vulnerabilities (the known vulnerabilities being defined using a second naming convention which is different from the first naming convention). In various examples below, text classification and mapping techniques are described for the automated equivalence mapping.

In some examples, a method is provided. The method includes determining a set of one or more processed words based on applying text classification to one or more names associated with a product, wherein the text classification is based on analyzing a database of names associated with a plurality of products; determining similarity scores between the set of one or more processed words and names associated with one or more known vulnerabilities maintained in a database of known vulnerabilities in products; and performing equivalence mapping between the one or more names associated with the product and the one or more known vulnerabilities, based on the similarity scores.

In some examples, a system is provided. The system, comprises one or more processors; and a non-transitory computer-readable storage medium containing instructions which, when executed on the one or more processors, cause the one or more processors to perform operations including: determining a set of one or more processed words based on applying text classification to one or more names associated with a product, wherein the text classification is based on analyzing a database of names associated with a plurality of products; determining similarity scores between the set of one or more processed words and names associated with one or more known vulnerabilities maintained in a database of known vulnerabilities in products; and performing equivalence mapping between the one or more names associated with the product and the one or more known vulnerabilities, based on the similarity scores.

In some examples, a non-transitory machine-readable storage medium is provided, including instructions configured to cause a data processing apparatus to perform operations including: determining a set of one or more processed words based on applying text classification to one or more names associated with a product, wherein the text classification is based on analyzing a database of names associated with a plurality of products; determining similarity scores between the set of one or more processed words and names associated with one or more known vulnerabilities maintained in a database of known vulnerabilities in products; and performing equivalence mapping between the one or more names associated with the product and the one or more known vulnerabilities, based on the similarity scores.

In some examples, the names associated with the plurality of products are based on a first naming convention and the names associated with the one or more known vulnerabilities are defined using a second naming convention, the first naming convention being different from the second naming convention.

In some examples, analyzing the database of names associated with the plurality of products comprises: splitting one or more complex words into component word units based on performing word boundary detection on the database of names associated with the plurality of products.

In some examples, analyzing the database of names associated with the plurality of products comprises: canonicalizing at least a subset of words in the database of names associated with the plurality of products, based on identifying variations for the subset of names in the database of names associated with the plurality of products.

In some examples, analyzing the database of names associated with the plurality of products comprises: identifying stop words in the database of names associated with the plurality of products.

In some examples, analyzing the database of names associated with the plurality of products comprises: associating weights with words in the database of names associated with the plurality of products comprises.

In some examples, determining the similarity scores comprises: determining word distances between the set of one or more processed words and names associated with one or more known vulnerabilities maintained in a database of known vulnerabilities.

In some examples, performing the equivalence mapping comprises: determining a set of potential matches between the one or more names associated with the product and the one or more known vulnerabilities, based on the similarity scores; determining precise scores for the set of potential matches; and identifying a subset of potential matches from the set of potential matches, the subset of potential matches having precise scores greater than a predetermined threshold.

### DESCRIPTION OF EXAMPLE EMBODIMENTS

Disclosed herein are systems, methods, and computer-readable media for automatically detecting possible equivalents of a vulnerability definition in a library or package used by a product and mapping these equivalents to the CPEs maintained in the NVD to overcome the above-noted problems in existing approaches. In some examples, systems and techniques are provided for automatically mapping packages, libraries, files, or other names used in software products or applications to known vulnerabilities maintained in a database such as the National Vulnerability Database (NVD). To overcome the challenges associated with different naming conventions and definitions relying on customizations and legacy nomenclature which may frequently differ from a Common Platform Enumeration (CPE) definitions for vulnerabilities provided in NVD, machine learning based text-classifiers are disclosed. The text-classifiers can be used to extract meaning from a large collection of library names and definitions used in different products.

For example, the text-classifiers discussed herein can be applied on a large database of libraries for Java packages, such as libraries for Maven standards, Manifests, or others. For example, a large maven Group Id, Artefact Id, Version Id (GAV) database containing GAVs for numerous Java packages can be downloaded from www.maven.org. The text classifier may perform techniques such as word boundary detection, canonicalization to recognize and associate variations with another, recognize synonyms, synthesize meaning of terms, implement stemming to identify stop words, assign word weights, etc., on the GAV database to classify the names in the GAV database. The text-classifier can be used for processing the library names in a product to obtain a set of processed words. The processed words can be mapped by an equivalence mapping engine to the CPE definitions or other naming convention/standard to determine whether a known vulnerability from the NVD may exist in the product. These and other aspects will be discussed in further detail with reference to the figures in the following sections.

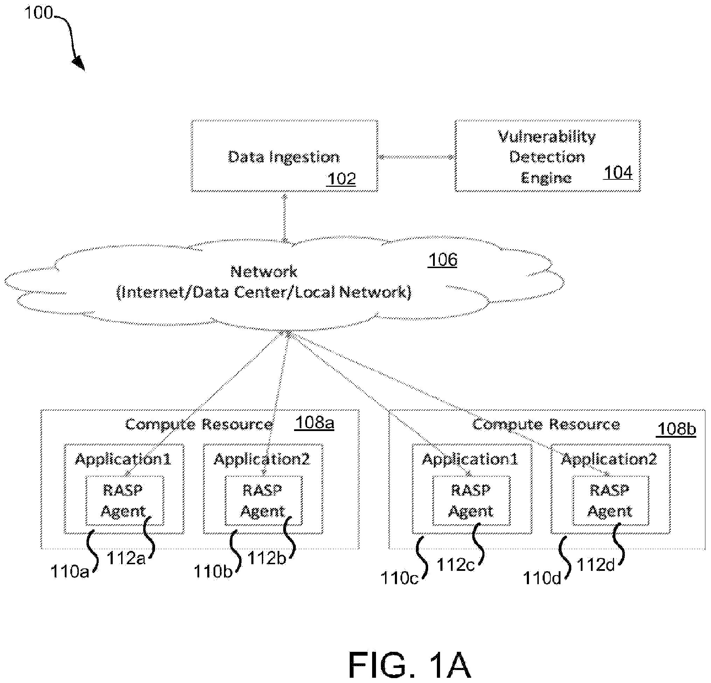

FIG. 1A illustrates a diagram of an example network environment 100 according to aspects of this disclosure. A network 106 can represent any type of communication, data, control, or transport network. For example, the network 106 can include any combination of wireless, over-the-air network (e.g., Internet), a local area network (LAN), wide area network (WAN), software-defined WAN (SDWAN), data center network, physical underlay, overlay, or other. The network 106 can be used to connect various network elements such as routers, switches, fabric nodes, edge devices, aggregation switches, gateways, ingress and/or egress switches, provider edge devices, and/or any other type of routing or switching device, compute devices or compute resources such as servers, firewalls, processors, databases, virtual machines, etc.

In some examples, compute resources 108a-b represent examples of the network devices which may be connected to the network 106 for communications with one another and/or with other devices. For example, the compute resources 108a-b can include various host devices, servers, processors, virtual machines, or others capable of hosting applications, executing processes, performing network management functions, etc. In some examples, applications 110a-b can execute on the compute resource 108a, and applications 110c-d can execute on the compute resource 108b. The applications can include any type of software applications, processes, or workflow defined using instructions or code.

A data ingestion block 102 representatively shows a mechanism for providing input data any one or more of the applications 110a-d. The network 106 can be used for directing the input data to the corresponding applications 110a-d for execution. One or more applications 110a-d may generate and interpret program statements obtained from the data ingestion block 102, for example, during their execution. Instrumentation such as vulnerability detection can be provided by a vulnerability detection engine 104 for evaluating the applications during their execution. During runtime, the instrumented application gets inputs and creates outputs as part of its regular workflow. Each input that arrives at an instrumented input (source) point is checked by one or more vulnerability sensors, which examine the input for syntax that is characteristic of attack patterns, such as SQL injection, cross-site scripting (XSS), file path manipulation, and/or JavaScript Object Notation (JSON) injection. For example, runtime application self-protection (RASP) agents 112a-d can be provided in the corresponding applications 110a-d for evaluating the execution of applications during runtime.

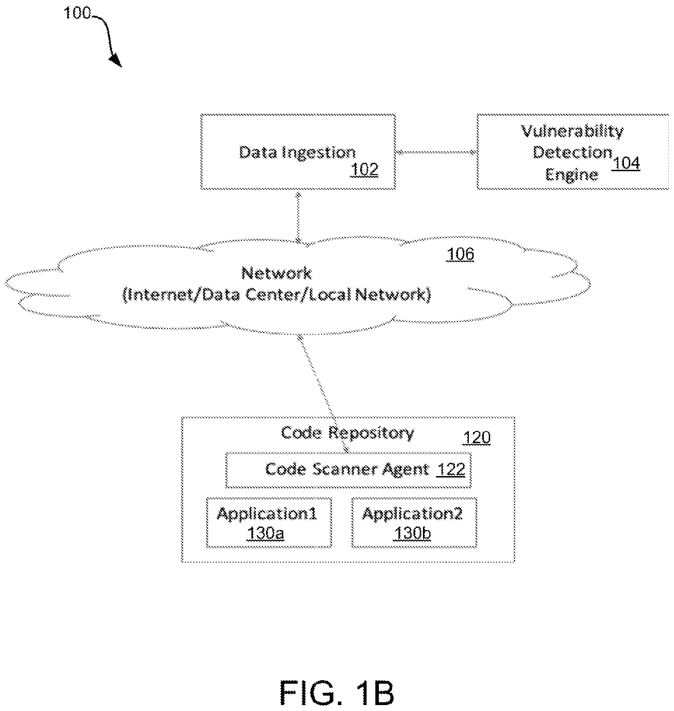

The RASP agents 112a-d may conduct any type of security evaluation of applications as they execute. In some examples, as shown with reference to FIG. 1B, the applications 130a-b can be store on a code repository 120 or other memory storage, rather than being actively executed on a computing resource. Similar agents such as the RASP agents can perform analysis (e.g., static analysis) of the applications. A code scanner agent 122, for example, can be used to analyze the code in the applications 130a-b. The RASP agents 112a-d and/or the code scanner agent 122 or other such embedded solutions can be used for analyzing the health and state of applications in various stages, such as during runtime or in a static condition in storage.

In some examples, sensors can be used to monitor and gather dynamic information related to applications executing on the various servers or virtual machines and report the information to the collectors for analysis. The information can be used for providing application security, such as to the RASP agents. The RASP techniques, for example, can be used to protect software applications against security vulnerabilities by adding protection features into the application. In typical RASP implementations, these protection features are instrumented into the application runtime environment, for example by making appropriate changes and additions to the application code and/or operating platform. The instrumentation is designed to detect suspicious behavior during execution of the application and to initiate protective action when such behavior is detected.

During runtime of applications on virtual machines or servers in the network environment 100, for example, the sensors provided for monitoring the instrumented applications can receive inputs and creates outputs as part of the regular workflow of the applications. In some examples, inputs that arrives at an instrumented input (source) point of a sensor can be checked for one or more vulnerabilities. For example, the sensors may gather information pertaining to applications to be provided to one or more collectors, where an analytics engine can be used to analyze whether vulnerabilities may exist in the applications.

The vulnerabilities can include weaknesses, feature bugs, errors, loopholes, etc., in a software application that can be exploited by malicious actors to gain access to, corrupt, cause disruptions, conduct unauthorized transactions, or cause other harmful behavior to any portion or all of the network environment 100. For example, cyber-attacks on computer systems of various businesses and organizations can be launched by breaching security systems (e.g., using computer viruses, worms, Trojan horses, ransomware, spyware, adware, scareware, and other malicious programs) due to vulnerabilities in the software or applications executing on the network environment 100. Most businesses or organizations recognize a need for continually monitoring of their computer systems to identify software at risk not only from known software vulnerabilities but also from newly reported vulnerabilities (e.g., due to new computer viruses or malicious programs). Identification of vulnerable software allows protective measures such as deploying specific anti-virus software or restricting operation of the vulnerable software to limit damage.

As previously described, system or software vulnerabilities may be identified as they are detected, cataloged, and published by independent third parties or organizations. Government organizations such as the National Institute for Standards and Technology (NIST) as well as private firms (e.g., anti-virus software developers) can report known vulnerabilities for use by private individuals and organizations in detecting whether known vulnerabilities exist in their systems and determine appropriate remedial measures. Databases such as the NVD maintained by the National Institute of Standards and Technology (NIST) contain a list of known vulnerabilities in various software applications and products. Consulting the NVD using the information obtained from the applications can reveal whether an application has a known vulnerability. However, mapping the information gathered during the runtime of an application in an automated manner to obtain real time vulnerability assessment is a significant challenge in known approaches because such processes are typically very tedious and rely on significant manual intervention because of a lack of standardization across different application dependencies, libraries, definitions, nomenclatures, naming conventions, etc.

A computer security organization that catalogs or reports computer system vulnerabilities may use an industry naming standard (software nomenclature) to report software system vulnerabilities. For example, NIST, which investigates and reports software system vulnerabilities, subscribes to the Common Platform Enumeration (CPE) standard for naming software systems. The industry naming standards may provide guidance on how software systems should be named so that the reported vulnerabilities can be mapped to the exact same software systems in a business or organization's computer system regardless of who is reporting those vulnerabilities. The standardized naming of software systems for vulnerability reporting may enable various stakeholders across different entities and organizations to share vulnerability reports and other information in a commonly understood format.

Unfortunately, many of the existing software systems pre-date use of the naming standards for the software nomenclature used in reporting vulnerabilities. The names of the existing or pre-deployed software systems may not comply with the software naming standards now used (e.g., by NIST) for reporting vulnerabilities. For instance, a business or organization may refer to or name a pre-deployed software component in its computer system as org.apache.spark:1.6", "Apache Spark version 1.6.1", etc, however, NIST under the CPE standard, may report a vulnerability on this particular software component as "apache.spark: 1.6.1". Further, even when common naming standards are used for software systems or components, other identifying information related to the software systems or components such as versions, updates and editions may be represented or named differently by different businesses and organizations. In particular, this other identifying information related to a software system may be represented or named differently by a business organization than the representation or name used for the other identifying information in the standardized vulnerability reports published by the third party computer security organizations.

Due to the vast number of different software system products used, standardization attempts by organizations or individuals is a significant challenge which may be possibly futile. Haphazard and uncoordinated standardization attempts can lead to imprecise names. Further, any free and open-source software systems deployed in an organization's computer systems can have unstandardized and conflicting names. Accordingly, a user or system administrator may be tasked with manually mapping the libraries to the known vulnerabilities in the NVD to utilize the benefits of the NVD or other such standard database.

Example systems and techniques described herein are directed to automated mapping of the non-standard names and information used in applications and libraries to vulnerability databases using standardized naming, such as to the CPE used by NVD. The automated mapping can be implemented by one or more computing devices and storage mechanisms such as databases, classifiers, mapping functions and others which may be deployed in the network environment 100, for example.

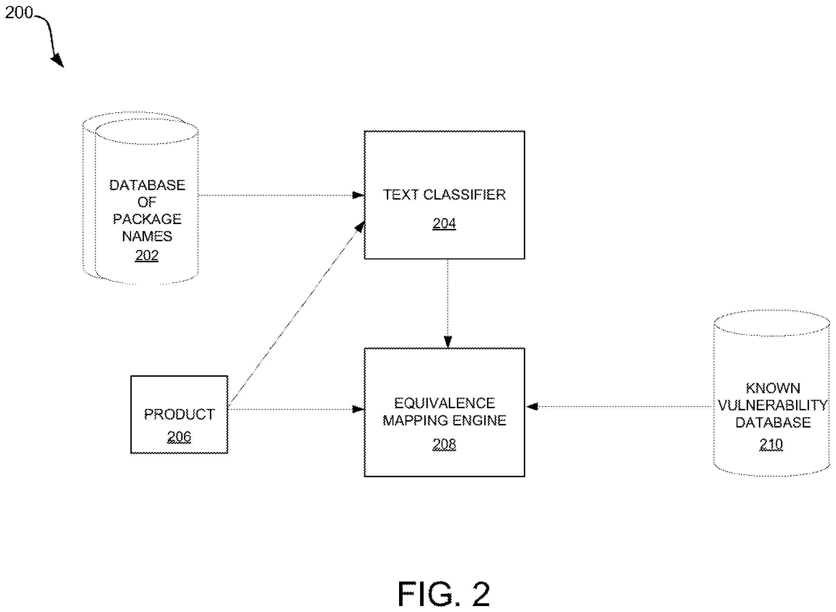

FIG. 2 illustrates a system 200 configured for automated equivalence mapping between one or more software products, packages, libraries, or the like and known vulnerabilities maintained in a standard database such as the NVD. The system 200 illustrates various functional blocks whose functionality will be explained below, while keeping in mind that these functional blocks may be implemented by a suitable combination of computational devices, network systems, and storage mechanisms such as those provided in the network environment 100.

One or more databases of package names 202 can be obtained from various sources. For example, a database of package names 202 can include names of Apache Maven products/packages available from a publicly accessible repository such as a website, cloud storage location or other. A Maven database can include popularly used Java package names in a naming convention which uses Group ID, Artefact ID, and Version ID (GAV) to name the various software products developed and supported by Maven. Although the Maven GAV is used as an illustrative example here, it will be understood that various other databases of known package names, including those of internal products used in organizations, can be used in addition to or as an alternative to the Maven GAV names in the database of package names 202. For example, the database of package names 202 can include package names from naming conventions/standards used in Gradle, Manifest, or other libraries used for Java projects. In general, the naming convention used for names in the database of package names 202 is referred to as a first naming convention, while a naming convention used for known vulnerabilities such as those defined using the CPE in the NVD are referred to as a second naming convention, where the first naming convention is different from the second naming convention.

Continuing with the example of Maven GAV, the database of package names 202 can be populated with a large collection of names in the GAV format, e.g., by downloading all project names from the Maven database available at www.maven.org or other suitable source location. In the GAV format, Group Id uniquely identifies a project across all projects. The Group ID follows Java's package name rules. The Group ID starts with a reversed domain name which may be controlled by a user. For example, "org.apache.maven" or "org.apache.commons" can be Group IDs. It is noted that Maven does not enforce the above naming rules, which means that many legacy projects may not follow this naming convention and instead may use single word Group IDs. Furthermore, within the Group ID, a user may create one or more subgroups to reflect a project's structure. For example, the subgroup names can be created by appending a new identifier to a parent's Group ID, such as "org.apache.maven.plugins" or "org.apache.maven.reporting" created by appending identifiers to "org.apache.maven."

The Artefact ID is the name of a "JAR" file which does not include version information. A JAR or Java ARchive is a package file format typically used to aggregate many Java class files and associated metadata and resources (text, images, etc.) into one file for distribution. JAR files are archive files that include a Java-specific manifest file. The Artefact ID may be created using a user chosen name, e.g., "maven" or "commons-math".

The Version ID can include version information for the project being named, such as an identifier using a suitable combination of numbers, punctuations, etc. (e.g., version 1.0, 1.1, 1.0.1, etc.).

Depending on whether the above aspects of the GAV (Group ID, Artefact ID, Version ID) are created by users following a specific format, using standardizations specified by organizations, inherited from legacy names or third parties, etc., there can be numerous variations in the names for the same product or package. Thus, the database of package names 202 can include two or more names for the same product, or may exhibit patterns in naming conventions for similar products, products by the same vendor, etc. Classifying these product names using machine learning techniques according to example aspects of this disclosure can synthesize meaning or context behind the names and enable equivalence mapping to a standard format such as a CPE for known vulnerabilities, as maintained by the NVD. According to some examples, a text classifier 204 may be used to analyze one or more names obtained from the database of package names 202. One or more names of a product can be classified based on the text classifier 204 trained based on the analysis, to yield a set of processed words, where the processed words as discussed herein refer to words are output from the text classifier 204.

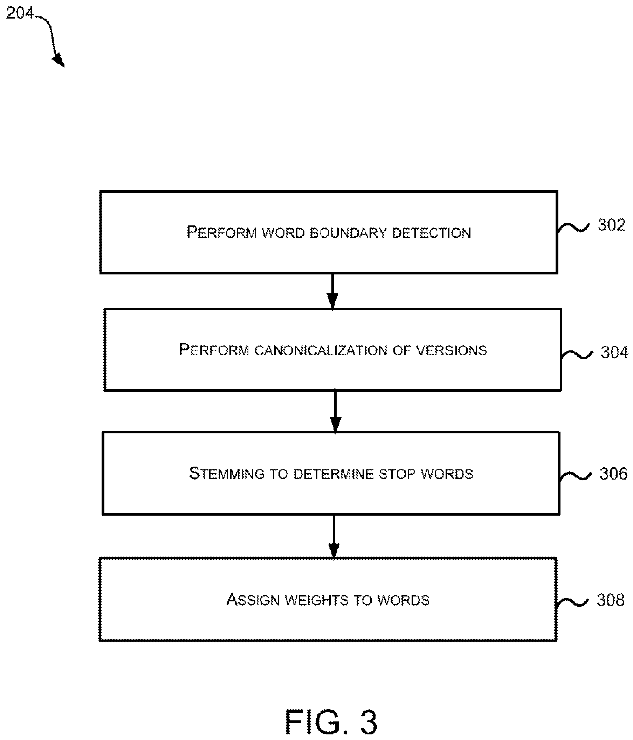

FIG. 3 illustrates examples of the text classification techniques which may be implemented by the text classifier 204 for analyzing the database of package names 202. FIG. 3 is illustrated as a process flow, but it will be understood that the techniques described with reference to the process steps need not be performed in the sequence illustrated, but equivalent functions or combinations thereof may be implemented in any suitable combination without deviating from the scope of the text classifier 204 described herein.

In step 302, the text classifier 204 can perform word boundary detection on the database of package names 202. For example, machine learning techniques may be used to identify word units in the database of package names 202. One or more dictionaries (e.g., including words of a natural language, words and names used in software programming languages, or others) may be used as exemplars or training data. The database of package names 202 can be analyzed to identify word boundaries. Complex words which may have been formed using a combination of two or more word units can be split along these identified boundaries to separate the complex words into its component word units. For example, word boundary detection techniques applied on the complex word "apachespark" may reveal that "apache" and "spark" appear as individual words in the dictionaries. Accordingly, splitting along a word boundary can result in splitting the complex word "apachespark" into separate words or word units "apache" and "spark". The result of splitting words based on identified word boundaries can facilitate canonicalization, word weighting, equivalence mapping, etc., on the individual word units.

In step 304, the text classifier 204 can perform canonicalization on the database of package names 202. In some examples, the canonicalization can be performed upon word boundary detection in step 302 to split the words, but in other examples, canonicalization may be independent of the step 302. For example, canonicalization can be applied to identify and standardize variations of the same word or name in the GAV format. This process may use machine learning techniques with possible input from skilled users to identify variations of the same word or name and associate these variations with the same name.

For example, some naming conventions may use acronyms or abbreviations of one or more words or names. Thus, "DB" and "database" may be variations of the same word used in different product names. Similarly, "Excel" and "XL" may be variations of the same name when referring to a spreadsheet, which may have been created using a Microsoft Excel file, while possibly having "spreadsheet" in the name of a file to also convey the same meaning. In some examples, the names can also include variations of numerals or alphabets to denote versions, such as "1.6.0" and "1.6" being alternatives used to denote the same version. Thus, in some examples, the variations for a file name (or variations in individual word units upon word boundary detection) may be based on specific industries, contexts, meanings. Recognizing these variations can be based on analyzing large collections of names and identifying similarities in names for the same or similar files, file types, libraries, etc. The process of canonicalization in the step 304 can lead to associations or mappings between different names which are recognized as variations or alternatives for the same name.

In step 306, the text classifier 204 can implement stemming processes on the database of package names 202 to determine stop words. For example, commonly used words for naming files or products can include ".com", "bin", etc., used as stop words. Stemming is a process for determining the stop words in the database of package names 202 created in the GAV format. In some examples, the stemming words can be excluded from the name of a product when determining equivalence to another name, such as in identifying similarity between a name in the GAV format and the vulnerability names in the CPE format. Excluding the stop words or minimizing their influence in determining the equivalence/similarity can be useful because the stop words or stemming words may not have inherent importance or high relative weight in the overall GAV based name of the product. Excluding or minimizing influence of stop words in the search can enable more efficient mapping functions to the known vulnerabilities maintained in the CPE format or other standard format.

In step 308, the text classifier 204 can assign weights to the words or word units obtained from splitting words. For example, minimizing the influence of stemming words or stop words can include assigning a low weight to the stemming words. Word weights may be based on determining the amount of variation in a name or information gain that is accomplished based on the inclusion of a specific word or word unit in the name of a product obtained from the database of package names 202. In some examples, words or word units which may contribute to the largest variation of a product name from other product names may be weighted more heavily, while the names contributing to the least variation may be weighted less. For example, in the name (or portion thereof) which includes "org.apache.spark", the word "org" may be assigned the lowest weight while the word "spark" may be assigned the highest weight. This is because many products may be found to include the word "org", which may lead to a determination that this word "org" may not contribute too heavily as a distinguishing feature of the name. On the other hand, the word "spark" may be used in a relatively smaller set of names which may have some common underlying characteristics such as belonging to a specific project, and thus weighting "spark" more heavily can mean it has higher relevance or stronger association with the specific project's name. When determining equivalence mapping to the product/package names having known vulnerabilities (e.g., in the NVD), word distances may be determined based on weighting the names using the weights applied by the text classifier 204.

As shown in FIG. 2, the text classification techniques determined by the text classifier 204 based on analyzing the database of package names 202 can be used to process one or more names in the product 206 to obtain a set of processed words. The set of processed words can be used to determine mapping between the one or more names in the product 206 and the known vulnerabilities.

Revisiting FIG. 2, the system 200 includes an equivalence mapping engine 208 configured to perform equivalence mapping based on the text classifier 204 described above. In some implementations, the text classifier 204 and the equivalence mapping engine 208 can be implemented in the same functional block or one or more processes can be redistributed amongst these functional blocks even though they are shown and described as separate functional blocks for implementing the techniques described herein according to some illustrative examples.

As illustrated, a product 206 can be assessed for the presence of known vulnerabilities using the equivalence mapping engine 208. In an example, the equivalence mapping engine 208 can utilize the text classifier 204 to analyze the names of libraries, files, etc., in a software product such as the product 206 and determine whether the known vulnerability database 210 may have known vulnerabilities which are pertinent to the product 206. For example, the equivalence mapping engine 208 can determine equivalence between one or more processed words obtained from names (e.g., named according to GAV naming conventions) in the product 206 and one or more known vulnerabilities (e.g., defined using the CPE) in the NVD or other known vulnerability database 210.

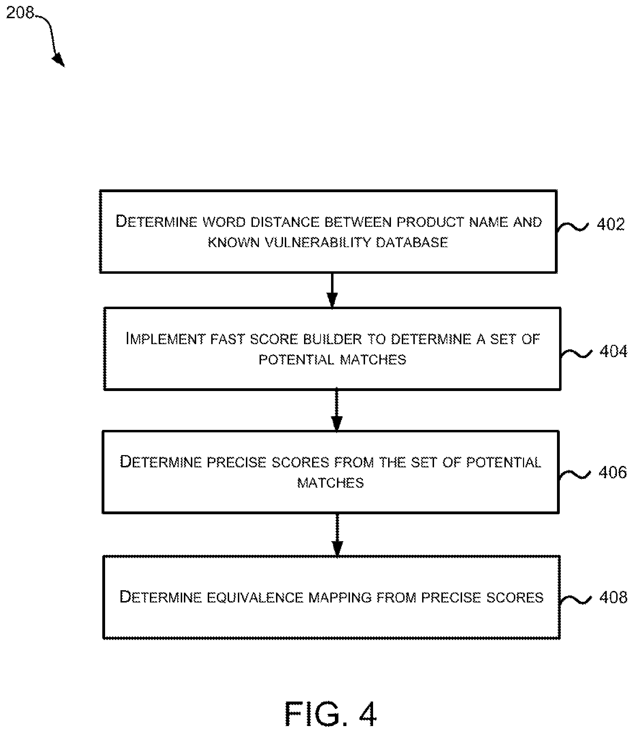

FIG. 4 illustrates examples of the equivalence mapping techniques which may be implemented by the equivalence mapping engine 208. FIG. 4 is illustrated as a process flow, but it will be understood that the techniques described with reference to the process steps need not be performed in the sequence illustrated, but equivalent functions or combinations thereof may be implemented in any suitable combination without deviating from the scope of equivalence mapping engine 208 described herein.

In step 402, the equivalence mapping engine 208 can determine word distance or lexical similarity between one or more processed words obtained by applying the text classifier 204 to names of the product 206 and the words obtained from the known vulnerability database 210. For example, the text classification techniques provided by the text classifier 204 based on one or more of the word boundary detection (e.g., step 302), canonicalization (e.g., step 304), determining stemming or stop words (e.g., step 306), and/or applying the weights to the words (e.g., step 308) can be used to classify or process the names of libraries or other software products in the product 206 to yield the set of processed words. For example, the names in the product 206 may be suitably split based on the guidance provided by the text classifier 204, variations to known alternatives identified based on canonicalization, stemming or stop words therein determined, and word units suitably weighted to generate a set of one or more processed words. The equivalence mapping engine 208 can implement a hashmap to consider variations of the names in the product 206, where the variations may be obtained from the database of package names 202 provided in the GAV format according to the above example.

In step 404, the equivalence mapping engine 208 can implement a fast score builder, e.g., using a hashmap or other mapping to yield a set of potential matches between the names in the product 206 and the known vulnerability database 210 (e.g., when there is at least one potential match). The set of potential matches may be too large in some cases, which could result in a large number of false positives. Thus a more precise mapping may be desirable.

In step 406, the equivalence mapping engine 208 can determine precise scores from the set of potential matches. For example, based on suitable weighting of the processed words, the similarity between the names in the product 206 (as well as their variations, if any) can be measured against the potential matches identified from the hashmap based fast score builder. For example, the potential matches may determine equivalence between the GAV based names and the potential matches defined in the CPE format obtained from the known vulnerability database 210. Similarity scores can be measured while accounting for upper or lower case sensitivities, typographical errors, common abbreviations or shortening of some words, etc. In some examples, the equivalent fields can be compared in measuring similarities. For example, numerical canonicalized versions obtained from the product 206 can be measured against similar version fields in the CPE, or product/vendor names can be compared against similar product/vendor name fields in the CPE, etc.

In step 406, the equivalence mapping engine 208 can determine equivalence mapping using the precise scores. For example, a threshold score may be predefined or predetermined to represent an acceptable score precision above which a GAV based name in the product 206 can be considered to match a CPE based known vulnerability obtained from the known vulnerability database 210. If the precise score is greater than this predetermined threshold score for one or more names of the product 206, the equivalence mapping engine 208 may identify the projects, files, libraries, packages, or other software associated with the one or more names as having potential known vulnerabilities. Information regarding the corresponding known vulnerabilities can be obtained from the known vulnerability database 210, such as the NVD. In some examples, additional remedial measures may be adopted based on guidance provided in the NVD for the known vulnerabilities.

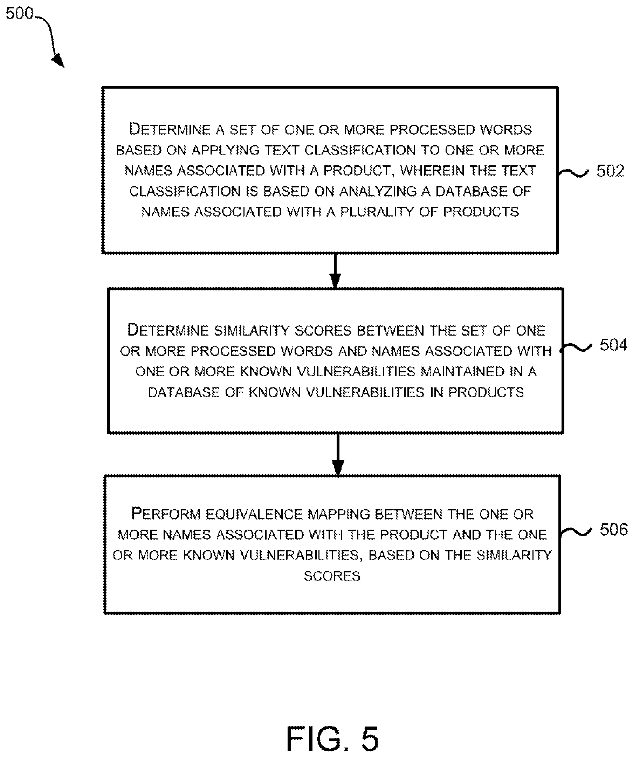

Having described example systems and concepts, the disclosure now turns to the process 500 illustrated in FIG. 5. The blocks outlined herein are examples and can be implemented in any combination thereof, including combinations that exclude, add, or modify certain steps.

At the block 502, the process 500 includes determining a set of one or more processed words based on applying text classification to one or more names associated with a product, wherein the text classification is based on analyzing a database of names associated with a plurality of products. For example, the text classifier 204 can be used to determine a set of one or more processed words based on applying text classification to one or more names associated with the product 206.

As described with reference to FIG. 3, the text classifier 204 can implement various functions for analyzing the database of names associated with the plurality of products. For example, as described with reference to step 302, analyzing the database of names associated with the plurality of products can include splitting one or more complex words into component word units based on performing word boundary detection on the database of names associated with the plurality of products. Further, as described with reference to step 304, analyzing the database of names associated with the plurality of products can also include canonicalizing at least a subset of words in the database of names associated with the plurality of products, based on identifying variations for the subset of names in the database of names associated with the plurality of products. Additionally, as described with reference to step 306, analyzing the database of names associated with the plurality of products can also include analyzing the database of names associated with the plurality of products can also include identifying stop words in the database of names associated with the plurality of products. Moreover, as described with reference to step 308, analyzing the database of names associated with the plurality of products can also associating weights with words in the database of names associated with the plurality of products comprises.

At the block 504, the process 500 includes determining similarity scores between the set of one or more processed words and names associated with one or more known vulnerabilities maintained in a database of known vulnerabilities in products. For example, the equivalence mapping engine 208 can be used to determine similarity scores between the set of one or more processed words and names associated with one or more known vulnerabilities maintained in a database of known vulnerabilities in products. In some examples, as described with reference to step 402 of FIG. 4, determining the similarity scores can include determining word distances between the set of one or more processed words and names associated with one or more known vulnerabilities maintained in a database of known vulnerabilities.

At the block 506, the process 500 includes performing equivalence mapping between the one or more names associated with the product and the one or more known vulnerabilities, based on the similarity scores. For example, the equivalence mapping engine 208 can be used to perform equivalence mapping between the one or more names associated with the product and the one or more known vulnerabilities, based on the similarity scores, as discussed with reference to FIG. 4. In some examples, performing the equivalence mapping can include determining a set of potential matches between the one or more names associated with the product and the one or more known vulnerabilities, based on the similarity scores (e.g., as discussed with reference to step 404), determining precise scores for the set of potential matches (e.g., as discussed with reference to step 406), and identifying a subset of potential matches from the set of potential matches, the subset of potential matches having precise scores greater than a predetermined threshold (e.g., as discussed with reference to step 408).

In the above-referenced examples, the names associated with the plurality of products can be based on a first naming convention (e.g., Maven GAV) and the names associated with the one or more known vulnerabilities can be defined using a second naming convention (e.g., the CPE used for defining vulnerabilities in the NVD), the first naming convention being different from the second naming convention.

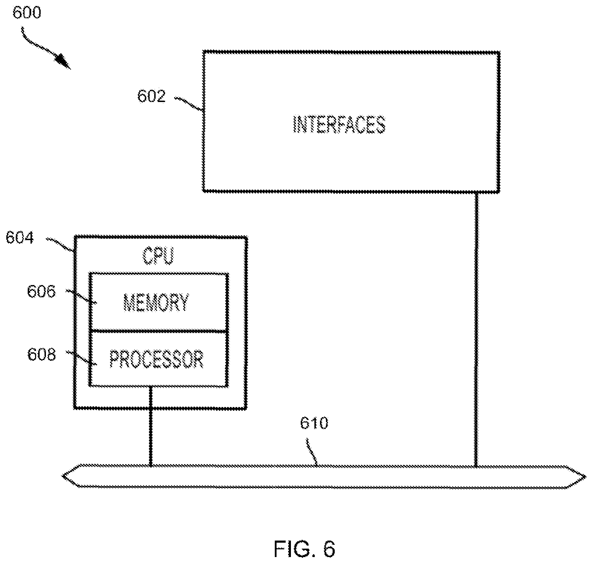

FIG. 6 illustrates an example network device 600 suitable for implementing the aspects according to this disclosure. In some examples, the devices described with reference to system 100 and/or the network architecture may be implemented according to the configuration of the network device 600. The network device 600 includes a central processing unit (CPU) 604, interfaces 602, and a connection 610 (e.g., a PCI bus). When acting under the control of appropriate software or firmware, the CPU 604 is responsible for executing packet management, error detection, and/or routing functions. The CPU 604 preferably accomplishes all these functions under the control of software including an operating system and any appropriate applications software. The CPU 604 may include one or more processors 608, such as a processor from the INTEL X86 family of microprocessors. In some cases, processor 608 can be specially designed hardware for controlling the operations of the network device 600. In some cases, a memory 606 (e.g., non-volatile RAM, ROM, etc.) also forms part of the CPU 604. However, there are many different ways in which memory could be coupled to the system.

The interfaces 602 are typically provided as modular interface cards (sometimes referred to as "line cards"). Generally, they control the sending and receiving of data packets over the network and sometimes support other peripherals used with the network device 600. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communications intensive tasks, these interfaces allow the CPU 604 to efficiently perform routing computations, network diagnostics, security functions, etc.

Although the system shown in FIG. 6 is one specific network device of the present technologies, it is by no means the only network device architecture on which the present technologies can be implemented. For example, an architecture having a single processor that handles communications as well as routing computations, etc., is often used. Further, other types of interfaces and media could also be used with the network device 600.

Regardless of the network device's configuration, it may employ one or more memories or memory modules (including memory 606) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. The memory 606 could also hold various software containers and virtualized execution environments and data.

The network device 600 can also include an application-specific integrated circuit (ASIC), which can be configured to perform routing and/or switching operations. The ASIC can communicate with other components in the network device 600 via the connection 610, to exchange data and signals and coordinate various types of operations by the network device 600, such as routing, switching, and/or data storage operations, for example.

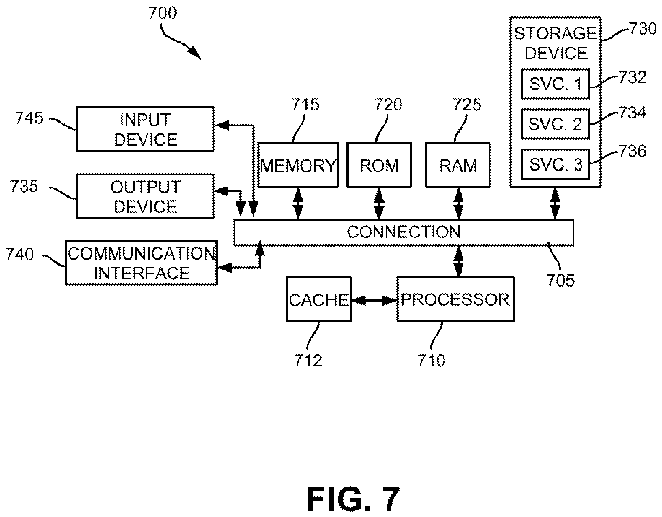

FIG. 7 illustrates an example computing device architecture 700 of an example computing device which can implement the various techniques described herein. The components of the computing device architecture 700 are shown in electrical communication with each other using a connection 705, such as a bus. The example computing device architecture 700 includes a processing unit (CPU or processor) 710 and a computing device connection 705 that couples various computing device components including the computing device memory 715, such as read only memory (ROM) 720 and random access memory (RAM) 725, to the processor 710.

The computing device architecture 700 can include a cache of high-speed memory connected directly with, in close proximity to, or integrated as part of the processor 710. The computing device architecture 700 can copy data from the memory 715 and/or the storage device 730 to the cache 712 for quick access by the processor 710. In this way, the cache can provide a performance boost that avoids processor 710 delays while waiting for data. These and other modules can control or be configured to control the processor 710 to perform various actions. Other computing device memory 715 may be available for use as well. The memory 715 can include multiple different types of memory with different performance characteristics. The processor 710 can include any general purpose processor and a hardware or software service, such as service 1 732, service 2 734, and service 3 736 stored in storage device 730, configured to control the processor 710 as well as a special-purpose processor where software instructions are incorporated into the processor design. The processor 710 may be a self-contained system, containing multiple cores or processors, a bus, memory controller, cache, etc. A multi-core processor may be symmetric or asymmetric.

To enable user interaction with the computing device architecture 700, an input device 745 can represent any number of input mechanisms, such as a microphone for speech, a touch-sensitive screen for gesture or graphical input, keyboard, mouse, motion input, speech and so forth. An output device 735 can also be one or more of a number of output mechanisms known to those of skill in the art, such as a display, projector, television, speaker device, etc. In some instances, multimodal computing devices can enable a user to provide multiple types of input to communicate with the computing device architecture 700. The communications interface 740 can generally govern and manage the user input and computing device output. There is no restriction on operating on any particular hardware arrangement and therefore the basic features here may easily be substituted for improved hardware or firmware arrangements as they are developed.

Storage device 730 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 725, read only memory (ROM) 720, and hybrids thereof. The storage device 730 can include services 732, 734, 736 for controlling the processor 710. Other hardware or software modules are contemplated. The storage device 730 can be connected to the computing device connection 705. In one aspect, a hardware module that performs a particular function can include the software component stored in a computer-readable medium in connection with the necessary hardware components, such as the processor 710, connection 705, output device 735, and so forth, to carry out the function.

In summary, systems, methods, and computer-readable media for identifying known vulnerabilities in a software product include determining a set of one or more processed words based on applying text classification to one or more names associated with a product, where the text classification is based on analyzing a database of names associated with a database of products. Similarity scores are determined between the set of one or more processed words and names associated with one or more known vulnerabilities maintained in a database of known vulnerabilities in products. Equivalence mapping is performed between the one or more names associated with the product and the one or more known vulnerabilities, based on the similarity scores. Known vulnerabilities in the product are identified based on the equivalence mapping.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Some examples of such form factors include general purpose computing devices such as servers, rack mount devices, desktop computers, laptop computers, and so on, or general purpose mobile computing devices, such as tablet computers, smart phones, personal digital assistants, wearable devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" a set indicates that one member of the set or multiple members of the set satisfy the claim. For example, claim language reciting "at least one of A and B" means A, B, or A and B.

## Claims

1. A method comprising:
determining a set of one or more processed words based on applying text classification (204) to one or more names associated with a product (206), wherein the text classification is based on analyzing a database of names (202) associated with a plurality of products, the analysis comprising associating weights with words in the database, wherein the weights are based on determining the information gain associated with the inclusion of a specific word or word unit in the name of a product in the database such that words or word units which contribute to the largest variation of a product name from other product names are weighted more heavily;
determining similarity scores between the set of one or more processed words and names associated with one or more known vulnerabilities maintained in a database (210) of known vulnerabilities in products, wherein determining similarity scores comprises determining word distances between the set of one or more processed words and the names associated with the known vulnerabilities in the database, wherein word distances are determined using the weights applied by the text classifier; and
performing equivalence mapping between the one or more names associated with the product and the one or more known vulnerabilities, based on the similarity scores.

2. The method of claim **1,** wherein the names associated with the plurality of products are based on a first naming convention and the names associated with the one or more known vulnerabilities are defined using a second naming convention, the first naming convention being different from the second naming convention.

3. The method of claim 1 or 2, wherein analyzing the database of names associated with the plurality of products comprises:
splitting one or more complex words into component word units based on performing word boundary detection on the database of names associated with the plurality of products.

4. The method of any of claims 1 to 3, wherein analyzing the database of names associated with the plurality of products comprises:
canonicalizing at least a subset of words in the database of names associated with the plurality of products, based on identifying variations for the subset of names in the database of names associated with the plurality of products.

5. The method of any of claims 1 to 4, wherein analyzing the database of names associated with the plurality of products comprises:
identifying stop words in the database of names associated with the plurality of products.

6. The method of any of claims 1 to 5, wherein performing the equivalence mapping comprises:
determining a set of potential matches between the one or more names associated with the product and the one or more known vulnerabilities, based on the similarity scores;
determining precise scores for the set of potential matches; and
identifying a subset of potential matches from the set of potential matches, the subset of potential matches having precise scores greater than a predetermined threshold.

7. An apparatus comprising:
means for determining a set of one or more processed words based on applying text classification (204) to one or more names associated with a product (206), wherein the text classification is based on analyzing a database of names (202) associated with a plurality of products, the analysis comprising associating weights with words in the database, wherein weights are based on determining the information gain associated with the inclusion of a specific word or word unit in the name of a product in the database such that words or word units which contribute to the largest variation of a product name from other product names are weighted more heavily;
means for determining similarity scores between the set of one or more processed words and names associated with one or more known vulnerabilities maintained in a database (210) of known vulnerabilities in products wherein determining similarity scores comprises determining word distances between the set of one or more processed words and the names associated with the known vulnerabilities in the database, wherein word distances are determined using the weights applied by the text classifier; and
means for performing equivalence mapping between the one or more names associated with the product and the one or more known vulnerabilities, based on the similarity scores.

8. The apparatus according to claim 7 further comprising means for implementing the method according to any of claims 2 to 6.

9. A computer program, computer program product, machine learning model or computer readable medium comprising instructions which, when executed by a computer, cause the computer to carry out the steps of the method of any of claims 1 to 6.

## Patentansprüche

1. Verfahren, umfassend:
Bestimmen einer Menge von einem oder mehreren verarbeiteten Wörtern basierend auf der Anwendung einer Textklassifizierung (204) auf einen oder mehrere Namen, die einem Produkt (206) zugeordnet sind, wobei die Textklassifizierung auf der Analyse einer Datenbank mit Namen (202) basiert, die einer Vielzahl von Produkten zugeordnet sind, wobei die Analyse das Zuordnen von Gewichten zu Wörtern in der Datenbank umfasst, wobei die Gewichte auf der Bestimmung des Informationsgewinns in Zusammenhang mit der Aufnahme eines bestimmten Wortes oder einer bestimmten Worteinheit in den Namen eines Produkts in der Datenbank basieren, sodass Wörter oder Worteinheiten, die zur größten Abweichung eines Produktnamens von anderen Produktnamen beitragen, stärker gewichtet werden;
Bestimmen von Ähnlichkeitswerten zwischen der Menge aus einem oder mehreren verarbeiteten Wörtern und Namen, die einer oder mehreren bekannten Schwachstellen zugeordnet sind, die in einer Datenbank (210) bekannter Schwachstellen in Produkten gespeichert sind, wobei das Bestimmen von Ähnlichkeitswerten das Bestimmen von Wortabständen zwischen der Menge aus einem oder mehreren verarbeiteten Wörtern und den Namen umfasst, die den bekannten Schwachstellen in der Datenbank zugeordnet sind, wobei Wortabstände mithilfe der vom Textklassifikator angewendeten Gewichte bestimmt werden; und
Durchführen einer Äquivalenzabbildung zwischen dem einen oder den mehreren Namen, die dem Produkt zugeordnet sind, und der einen oder den mehreren bekannten Schwachstellen anhand der Ähnlichkeitswerte.

2. Verfahren nach Anspruch 1, wobei die der Vielzahl von Produkten zugeordneten Namen auf einer ersten Namenskonvention basieren und die der einen oder mehreren bekannten Schwachstellen zugeordneten Namen mithilfe einer zweiten Namenskonvention definiert werden, wobei sich die erste Namenskonvention von der zweiten Namenskonvention unterscheidet.

3. Verfahren nach Anspruch 1 oder 2, wobei das Analysieren der Datenbank mit Namen, die der Vielzahl von Produkten zugeordnet sind, umfasst:
Aufteilen eines oder mehrerer zusammengesetzter Wörter in Worteinheiten als Wortbestandteile anhand einer Wortgrenzenerkennung in der Datenbank mit Namen, die der Vielzahl von Produkten zugeordnet sind.

4. Verfahren nach einem der Ansprüche 1 bis 3, wobei das Analysieren der Datenbank mit Namen, die der Vielzahl von Produkten zugeordnet sind, umfasst:
Kanonisieren mindestens einer Teilmenge von Wörtern in der Datenbank mit Namen, die der Vielzahl von Produkten zugeordnet sind, anhand der Identifizierung von Abweichungen für die Teilmenge von Namen in der Datenbank mit Namen, die der Vielzahl von Produkten zugeordnet sind.

5. Verfahren nach einem der Ansprüche 1 bis 4, wobei das Analysieren der Datenbank mit Namen, die der Vielzahl von Produkten zugeordnet sind, umfasst:
Identifizieren von Stoppwörtern in der Datenbank mit Namen, die der Vielzahl von Produkten zugeordnet sind.

6. Verfahren nach einem der Ansprüche 1 bis 5, wobei das Durchführen der Äquivalenzabbildung umfasst:
Bestimmen einer Menge potenzieller Übereinstimmungen zwischen dem einen oder den mehreren Namen, die dem Produkt zugeordnet sind, und der einen oder den mehreren bekannten Schwachstellen anhand der Ähnlichkeitswerte;
Bestimmen präziser Werte für die Menge potenzieller Übereinstimmungen; und
Identifizieren einer Teilmenge potenzieller Übereinstimmungen aus der Menge potenzieller Übereinstimmungen, wobei die Teilmenge potenzieller Übereinstimmungen präzise Werte aufweist, die größer als ein vorbestimmter Schwellenwert sind.

7. Gerät, umfassend:
Mittel zum Bestimmen einer Menge von einem oder mehreren verarbeiteten Wörtern basierend auf der Anwendung einer Textklassifizierung (204) auf einen oder mehrere Namen, die einem Produkt (206) zugeordnet sind, wobei die Textklassifizierung auf der Analyse einer Datenbank mit Namen (202) basiert, die einer Vielzahl von Produkten zugeordnet sind, wobei die Analyse das Zuordnen von Gewichten zu Wörtern in der Datenbank umfasst, wobei die Gewichte auf der Bestimmung des Informationsgewinns in Zusammenhang mit der Aufnahme eines bestimmten Wortes oder einer bestimmten Worteinheit in den Namen eines Produkts in der Datenbank basieren, sodass Wörter oder Worteinheiten, die zur größten Abweichung eines Produktnamens von anderen Produktnamen beitragen, stärker gewichtet werden;
Mittel zum Bestimmen von Ähnlichkeitswerten zwischen der Menge aus einem oder mehreren verarbeiteten Wörtern und Namen, die einer oder mehreren bekannten Schwachstellen zugeordnet sind, die in einer Datenbank (210) bekannter Schwachstellen in Produkten gespeichert sind, wobei das Bestimmen von Ähnlichkeitswerten das Bestimmen von Wortabständen zwischen der Menge aus einem oder mehreren verarbeiteten Wörtern und den Namen umfasst, die den bekannten Schwachstellen in der Datenbank zugeordnet sind, wobei Wortabstände mithilfe der vom Textklassifikator angewendeten Gewichte bestimmt werden; und
Mittel zum Durchführen einer Äquivalenzabbildung zwischen dem einen oder den mehreren Namen, die dem Produkt zugeordnet sind, und der einen oder den mehreren bekannten Schwachstellen anhand der Ähnlichkeitswerte.

8. Gerät nach Anspruch 7, das ferner Mittel zum Implementieren des Verfahrens nach einem der Ansprüche 2 bis 6 umfasst.

9. Computerprogramm, Computerprogrammprodukt, Maschinenlernmodell oder computerlesbares Medium, die Anweisungen umfassen, die, wenn sie von einem Computer ausgeführt werden, den Computer veranlassen, die Schritte des Verfahrens nach einem der Ansprüche 1 bis 6 auszuführen.

## Revendications

1. Procédé consistant à :
déterminer un ensemble d'un ou plusieurs mots traités sur la base de l'application d'une classification de texte (204) à un ou plusieurs noms associés à un produit (206), la classification de texte étant basée sur l'analyse d'une base de données de noms (202) associés à une pluralité de produits, l'analyse consistant à associer des pondérations aux mots dans la base de données, les pondérations étant basées sur la détermination du gain d'information associé à l'inclusion d'un mot ou d'une unité de mot spécifique dans le nom d'un produit dans la base de données, de telle sorte que les mots ou les unités de mot qui contribuent à la plus grande variation d'un nom de produit par rapport à d'autres noms de produit soient pondérés plus fortement ;
déterminer des scores de similarité entre l'ensemble d'un ou plusieurs mots traités et les noms associés à une ou plusieurs vulnérabilités connues conservées dans une base de données (210) de vulnérabilités connues de produits, la détermination de scores de similarité consistant à déterminer des distances de mot entre l'ensemble d'un ou plusieurs mots traités et les noms associés aux vulnérabilités connues dans la base de données, les distances de mot étant déterminées au moyen des pondérations appliquées par le classificateur de texte ; et
réaliser une mise en correspondance d'équivalence entre le ou les noms associés au produit et la ou les vulnérabilités connues, sur la base des scores de similarité.

2. Procédé selon la revendication 1, les noms associés à la pluralité de produits étant basés sur une première convention de dénomination et les noms associés à la ou aux vulnérabilités connues étant définis au moyen d'une seconde convention de dénomination, la première convention de dénomination étant différente de la seconde convention de dénomination.

3. Procédé selon la revendication 1 ou 2, l'analyse de la base de données de noms associés à la pluralité de produits consistant à :
diviser un ou plusieurs mots complexes en unités de mot composantes sur la base de la réalisation d'une détection de limite de mot sur la base de données de noms associés à la pluralité de produits.

4. Procédé selon l'une quelconque des revendications 1 à 3, l'analyse de la base de données de noms associés à la pluralité de produits consistant à :
canoniser au moins un sous-ensemble de mots dans la base de données de noms associés à la pluralité de produits, sur la base de l'identification de variations du sous-ensemble de noms dans la base de données de noms associés à la pluralité de produits.

5. Procédé selon l'une quelconque des revendications 1 à 4, l'analyse de la base de données de noms associés à la pluralité de produits consistant à :
identifier des mots vides dans la base de données de noms associés à la pluralité de produits.

6. Procédé selon l'une quelconque des revendications 1 à 5, la réalisation de la mise en correspondance d'équivalence consistant à :
déterminer un ensemble de correspondances potentielles entre le ou les noms associés au produit et la ou les vulnérabilités connues, sur la base des scores de similarité ;
déterminer des scores précis pour l'ensemble de correspondances potentielles ; et
identifier un sous-ensemble de correspondances potentielles à partir de l'ensemble de correspondances potentielles, le sous-ensemble de correspondances potentielles ayant des scores précis supérieurs à un seuil prédéterminé.

7. Appareil comprenant :
un moyen permettant de déterminer un ensemble d'un ou plusieurs mots traités sur la base de l'application d'une classification de texte (204) à un ou plusieurs noms associés à un produit (206), la classification de texte étant basée sur l'analyse d'une base de données de noms (202) associés à une pluralité de produits, l'analyse consistant à associer des pondérations aux mots dans la base de données, les pondérations étant basées sur la détermination du gain d'information associé à l'inclusion d'un mot ou d'une unité de mot spécifique dans le nom d'un produit dans la base de données, de telle sorte que les mots ou les unités de mot qui contribuent à la plus grande variation d'un nom de produit par rapport à d'autres noms de produit soient pondérés plus fortement ;
un moyen permettant de déterminer des scores de similarité entre l'ensemble d'un ou plusieurs mots traités et les noms associés à une ou plusieurs vulnérabilités connues conservées dans une base de données (210) de vulnérabilités connues de produits, la détermination de scores de similarité consistant à déterminer des distances de mot entre l'ensemble d'un ou plusieurs mots traités et les noms associés aux vulnérabilités connues dans la base de données, les distances de mot étant déterminées au moyen des pondérations appliquées par le classificateur de texte ; et
un moyen permettant de réaliser une mise en correspondance d'équivalence entre le ou les noms associés au produit et la ou les vulnérabilités connues, sur la base des scores de similarité.

8. Appareil selon la revendication 7, comprenant en outre un moyen permettant de mettre en œuvre le procédé selon l'une quelconque des revendications 2 à 6.

9. Programme informatique, produit-programme informatique, modèle d'apprentissage automatique ou support lisible par ordinateur comprenant des instructions qui, lorsqu'elles sont exécutées par un ordinateur, amènent l'ordinateur à réaliser les étapes du procédé selon l'une quelconque des revendications 1 à 6.
